# EUROPÄISCHE PATENTSCHRIFT

(11) **EP 3 308 065 B1**
(45) Veröffentlichungstag und Bekanntmachung des Hinweises auf die Patenterteilung: **22.09.2021**
(21) Anmeldenummer: 16719876.1
(22) Anmeldetag: 03.05.2016
(51) Int. Cl.: F16L 21/06, F16L 33/04, F16L 23/08

(54) **SCHELLE**
CLIP
COLLIER DE SERRAGE

(30) Priorität: 10.06.2015 DE 102015109207
(43) Veröffentlichungstag der Anmeldung: 18.04.2018
(73) Patentinhaber: NORMA Germany GmbH, 63477 Maintal (DE)
(72) Erfinder: GHIRARDI, Fabio, 63450 Hanau (DE); STOLL, Viktor, 63538 Grosskrotzenburg (DE); VON BREITENBACH, Gerrit, 63791 Karlstein (DE); KAYACIK, Erkan, 34841 Istanbul (TR)
(74) Vertreter: Patentanwälte Olbricht Buchhold Keulertz
(86) Internationale Anmeldenummer: PCT/EP2016/059841
(87) Internationale Veröffentlichungsnummer: WO 2016/198214

(56) Entgegenhaltungen:
- DE-A1- 3 403 781
- US-A1- 2005 246 869

## Beschreibung

Die Erfindung betrifft eine Schelle mit einem Schellenband gemäß dem Oberbegriff von Anspruch 1.

US2005/246869 A1 offenbart eine Schelle mit einem Schellenband, das einen Spannkopf mit zwei Spannbacken, in denen jeweils eine Durchführöffnung ausgebildet ist, durch die ein Spannelement zum Spannen der Schelle geführt ist.

Schellen wie Schlauchschellen und Profilschellen werden vielfältig eingesetzt, wie zum Beispiel zum Festlegen von Leitungsenden an Rohrstutzen oder, im Falle von Profilschellen, zum Verbinden von Leitungen. Beim Spannen der Schellen über das Spannelement werden die Spannbacken des Spannkopfes aufeinander zu bewegt, wodurch sich ein Innendurchmesser des Schellenbandes verringert. So wird eine radial nach innen gerichtete Spannkraft erzeugt, wobei im Falle von Profilschellen zusätzlich axiale Spannkräfte eingebracht werden. Über diese axialen Spannkräfte können Leitungsenden, die mit entsprechenden Flanschen versehen sind, die von der Schelle umgriffen werden, axial gegeneinander gedrückt werden.

Durch das Spannen der Schelle treten innerhalb der Schelle Spannungen auf, die nachteilige Einflüsse auf die Dauerhaltbarkeit haben können. Gerade bei Auftreten größerer Temperaturunterschiede kann ein sicherer Halt der Schelle nicht immer gewährleistet werden.

Der Erfindung liegt nun die Aufgabe zu Grunde, eine Schelle bereit zu stellen, bei der das Auftreten innerer Spannungen weitgehend reduziert ist und die insbesondere für Hochtemperaturanwendungen geeignet ist.

Diese Aufgabe wird durch eine Schelle mit den Merkmalen des Anspruchs 1 gelöst. Ausgestaltungen sind Gegenstand der Unteransprüche.

Bei einer Schelle mit einem Schellenband, das einen Spannkopf mit zwei Spannbacken aufweist, in denen jeweils eine Durchführöffnung ausgebildet ist, durch die ein Spannelement zum Spannen der Schelle geführt ist, wobei an einem Rand der Durchführöffnungen jeweils mindestens eine Anlagefläche ausgebildet ist, an die eine Auflagefläche des Spannelements zumindest teilweise anlegbar ist, ist erfindungsgemäß vorgesehen, dass die Spannbacken geneigt zueinander angeordnet sind, wobei in den Spannbacken zumindest eine Verstärkungssicke ausgebildet ist und eine der Spannbacken eine Verdrehsicherung für das Spannelement aufweist.

Diese Maßnahmenkombination, nämlich zum einen die Verstärkungssicke zur generellen Versteifung der Spannbacke, die geneigte Anordnung der Spannbacken und die integrierte Verdrehsicherung für das Spannelement führen zu einer Festlegung von Verformungsbereichen der Schelle, die entsprechend ausgelegt sein können. Innere Spannungen im übrigen Material der Schelle werden so klein gehalten. Dadurch wird die Schelle auch bei Temperarturwechseln und /oder hohen Temperaturen zuverlässiger, da weniger innere Spannungen abgebaut werden müssen, die zu einer ungleichmäßigen Verformung führen können.

Die Verstärkungssicke erstreckt sich dabei insbesondere auf einer Mittellinie der Spannbacke, die senkrecht zum Spannelement und einer Symmetrieachse des Schellenbandes verläuft.

Dabei ist besonders bevorzugt, dass sich beim Spannen durch die Verformung der Spannbacken ein linearer Zusammenhang zwischen den Bedienkräften und der Spannkraft ergibt. Damit ergibt sich eine einfache Steuerung der eingebrachten Spannkräfte und eine gute Reproduzierbarkeit.

Vorzugsweise weist das Spannelement einen Schraubbolzen mit einer Mutter auf, wobei gegebenenfalls der Schraubbolzen ein Außengewinde mit einer reibungsmindernden Beschichtung aufweist. Damit erfolgt eine weitere Reduzierung von Reibungsverlusten während des Spannens der Schelle, so dass hohe Spannkräfte erzeugt und relativ genau und reproduzierbar eingestellt werden können.

In einer bevorzugten Ausgestaltung sind die Spannbacken derart gegeneinander geneigt, dass sie sich beim Spannen zunächst teilweise berühren und beim weiteren Spannen aneinander anlegen. Die Spannbacken sind also nicht wie sonst üblich parallel zueinander ausgerichtet, sondern geneigt. Dadurch ergibt sich eine allmähliche Verformung beim Spannen, wobei die Spannbacken zunächst nur an eine Kante aneinander stoßen und schließlich flächig aneinander anliegen. Damit wird eine definierte Zunahme der erforderlichen Bedienkräfte erreicht.

Vorzugsweise beträgt ein Neigungswinkel zwischen den Spannbacken mehr als 0° und bis zu 20°. Gegenüber einer gedachten Mittellinie, die durch den Radius sowie in gleichem Abstand zu den Spannbacken zwischen diesen verläuft, hat dann jede Spannbacke einen Winkelbetrag zwischen 0° und 10°, wobei die Spannbacken im gleichen Winkelbetrag aber mit unterschiedlichen Vorzeichen geneigt sind. Die Spannbacken sind also symmetrisch angeordnet.

In einer bevorzugten Ausgestaltung weist mindestens eine Spannbacke zumindest eine zur anderen Spannbacke gerichtete Lasche auf. Beim Spannen erfolgt ein erster Kontakt dann über die Lasche, die beim weiteren Spannen elastisch verformt wird und damit einen gezielten Verformungswiderstand bildet. Dies kann dazu ausgenutzt werden, eine lineare Kraftzunahme beim Spannen einzustellen.

Vorzugsweise ist die Lasche einstückig mit der Spannbacke ausgebildet. Die Lasche ist dafür beispielsweise aus einem überstehenden Teil der Spannbacke gebildet, der gegenüber der Spannbacke entsprechend gebogen wird.

Alternativ kann die Lasche als Element ausgebildet sein, dass mit dem Spannelement an der Spannbacke gehalten ist. Die Lasche kann dann relativ einfach aus einem anderen Material als die übrige Schelle gebildet sein und kann auch problemlos nachgerüstet werden. Bevorzugterweise ist das Element als Verdrehsicherung für die Mutter ausgebildet. Ein Montieren bzw. ein Spannen der Schelle wird damit vereinfacht, da die Mutter beim Eindrehen des Schraubbolzens nicht gekontert werden muss. Dadurch ist eine Einhandbedienung möglich.

Vorzugsweise ist an beiden Spannbacken jeweils zumindest eine Lasche angeordnet. Diese Laschen kommen dann beim Spannen miteinander in Kontakt und bewirken eine allmähliche Zunahme eines Verformungswiderstandes, bis die Spannbacken schließlich flächig aneinander anliegen und ein weiteres Spannen nicht mehr möglich ist.

Insbesondere wenn zumindest eine der Anlageflächen eine reibungsmindernde Beschichtung aufweist, werden die zum Bewegen des Spannelements erforderlichen Bedienkräfte verringert, da Reibungskräfte, die beim Kontakt zwischen der Anlagefläche und der Auflagefläche des Spannelements eine Bewegung des Spannelements erschweren, reduziert werden. Damit können höhere Spannkräfte erzeugt werden. Zusätzlich lassen sich die Spannkräfte genauer einstellen, da durch die Reduzierung der Reibungskräfte geringere Verluste auftreten, die Ungenauigkeiten hervorrufen. Damit ergibt sich eine bessere Reproduzierbarkeit der eingestellten Spannkräfte, was auch höheren Qualitätsansprüchen genügt.

In einer bevorzugten Ausgestaltung ist die Anlagefläche erhaben, wobei die Anlagefläche kleiner ist als die Auflagefläche des Spannelements. Die Größe der tatsächlichen Kontaktfläche wird so minimiert, wodurch auch die auftretende Reibung weiter verringert wird.

Dabei ist besonders bevorzugt, dass die Anlagefläche in Form von insbesondere zwei diametral gegenüberliegenden Kreissegmenten ausgebildet ist. Damit ist eine stabile, wackelfreie Auflage der Auflagefläche an der mehrteiligen Anlagefläche möglich. Alternativ zu zwei Kreissegmenten kann die Anlagefläche auch auf mehrere Kreissegmente, beispielsweise drei oder vier, verteilt werden, die insbesondere gleichmäßig am Rand der Durchführöffnung verteilt sind.

Vorzugsweise ist die Anlagefläche im Bereich der Verstärkungssicke angeordnet, die in der Spannbacke ausgebildet ist. Diese Verstärkungssicke steht in der Regel über die umgebende Oberfläche der Spannbacke hervor und kann so die erhabenen Anlageflächen ausbilden, ohne dass eine weitere Umformung erforderlich ist. Damit wird ein Herstellungsaufwand gering gehalten.

Vorteilhafterweise ist die Schelle als Profilschelle ausgebildet, wobei das Schellenband eine Basis und zwei radial nach innen gerichtete Flanken umfasst. Dabei kann das Schellenband insbesondere einen trapezförmigen oder dreieckigen Querschnitt aufweisen. Bei einem dreieckigen Querschnitt wird die Basis von der Spitze im Bereich der Verbindung der Flanken gebildet. Durch eine Ausbildung als Profilschelle können nicht nur radiale, sondern auch axiale Spannkräfte eingebracht werden. Es ergeben sich so vielfältige Anwendungsmöglichkeiten für die Schelle.

Dabei kann vorgesehen sein, dass an zumindest einer Position in mindestens einer der Flanken mindestens eine Ausnehmung ausgebildet ist. Insbesondere können dabei in beiden Flanken an gleicher Position miteinander fluchtende Ausnehmungen vorgesehen werden. Ausnehmungen geben dem Schellenband eine gewisse Flexibilität, um einen Innendurchmesser soweit aufweiten zu können, dass die Schelle über entsprechende Flansche an den Leitungen gebracht werden kann.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine Schelle in Seitenansicht,
- Fig. 2: eine Spannbacke der Schelle,
- Fig. 3: die Spannbacke in Seitenansicht,
- Fig. 4: einen Spannkopf der Schelle,
- Fig. 5: eine geschnittene Seitenansicht einer Spannbacke,
- Fig. 6: eine Aufsicht auf eine Spannbacke und
- Fig. 7: eine Seitenansicht des Spannkopfes.

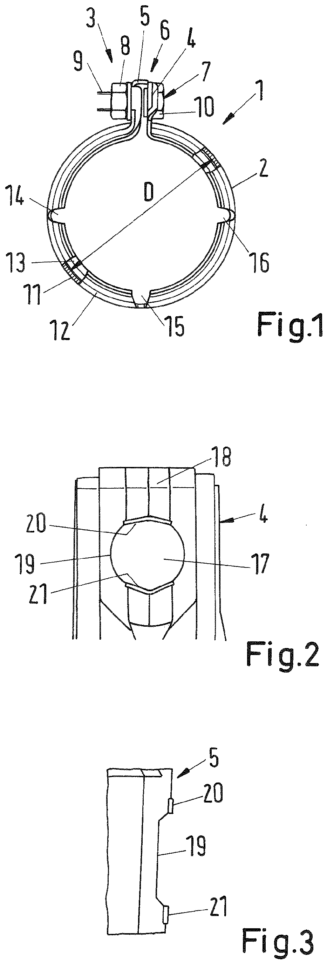

In Fig. 1 ist eine als Profilschelle ausgebildete Schelle 1 mit einem Schellenband 2 und einem Spannkopf 3 dargestellt. Der Spannkopf 3 umfasst zwei Spannbacken 4, 5, die mit einem Spannelement 6 aufeinander zu bewegt werden können, wodurch sich ein Innendurchmesser D des Schellenbandes 2 verringert.

Das Spannelement 6 weist einen Schraubbolzen 7 und eine Mutter 8 auf, wobei der Schraubbolzen durch in Fig. 1 nicht sichtbare Durchführöffnungen, die in den Spannbacken 4, 5 ausgebildet sind, geführt ist. Dabei weist der Schraubbolzen 7 ein Außengewinde 9 auf, auf das die Mutter 8 aufgeschraubt ist. Ein Kopf 10 des Schraubbolzens 7 sowie die Mutter 8 liegen jeweils an Anlageflächen an, die an Außenseiten der Spannbacken 4, 5 ausgebildet sind.

Das Schellenband 2 weist ein dreieckiges Querschnittsprofil auf. Dafür umfasst das Schellenband 2 eine Basis 11, von der zwei Flanken 12, 13 radial nach innen geneigt ausgehen. Um eine ausreichende Flexibilität des Schellenbandes 2 zu erreichen, damit die Schelle zusammengezogen werden kann, sind an drei Positionen Ausnehmungen 14, 15, 16 in den Flanken 12, 13 des Schellenbandes 2 eingebracht. Eine geringere oder größere Anzahl an Ausnehmungen ist ebenfalls möglich.

Fig. 2 zeigt die Spannbacke 4 des Spannkopfes 3 mit der Durchführöffnung 17 für das Spannelement 6. Die Spannbacke 4 weist eine vertikal verlaufende Verstärkungssicke 18 auf, die sich mittig durch die Durchführöffnung 17 erstreckt und von dieser unterbrochen wird.

An einem Rand 19 der Durchführöffnung 17 ist eine Anlagefläche für das Spannelement 6 in Form von zwei Kreissegmenten 20, 21 ausgebildet, die mit einer reibungsmindernden Beschichtung versehen sind. Wie aus Fig. 3 erkennbar ist, ist die aus den Kreissegmenten 20, 21 gebildete Anlagefläche gegenüber dem übrigen Rand 19 erhaben, so dass das Spannelement 6 nur in einem relativ kleinen Bereich in Anlage mit der Spannbacke 4 gelangt.

Die zweite Spannbacke 5 kann analog aufgebaut sein.

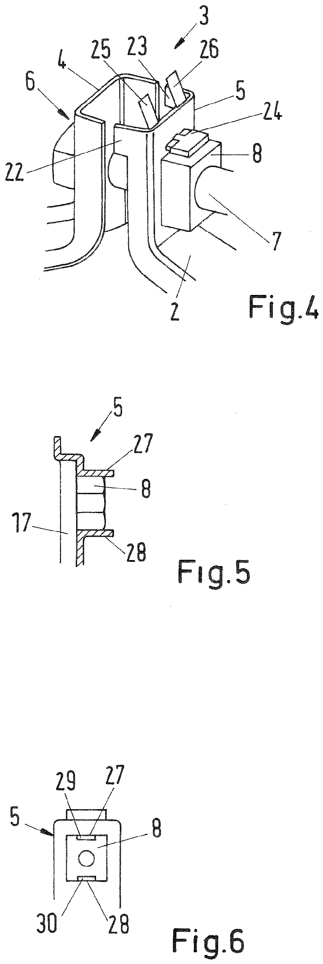

In Fig. 4 ist ein Ausschnitt der Schelle 2 mit dem Spannkopf 3 gezeigt, wobei an der Spannbacke 5 zur anderen Spannbacke 4 gerichtete, elastisch verformbare Laschen 22, 23 ausgebildet sind. An einem zusätzlichen Element 24, das mit Hilfe des Spannelements 6 an der Spannbacke 5 gehalten ist, sind weitere elastisch verformbare Laschen 25, 26 ausgebildet, die alternativ oder zusätzlich zu den Laschen 22, 23 vorgesehen werden können. Bei diesem Ausführungsbeispiel dient das Element 24 auch noch als Verdrehsicherung für die Mutter 8 des Spannelements 6. Die Verdrehsicherung verringert ein beim Spannen bzw. Eindrehen des Schraubbolzens 7 auftretendes Spiel und ermöglicht so eine genauere Steuerung der eingebrachten Spannung.

Fig. 5 zeigt eine geschnittene Seitenansicht der Spannbacke 5 einer bevorzugten Ausführungsform, bei der Haltelaschen 27, 28 aus der Durchführöffnung 17 derart herausgebogen sind, dass sie die Mutter 8 zwischen sich aufnehmen. Die Haltelaschen 27, 28 dienen dabei als Verdrehsicherung, die ein Mitdrehen der Mutter 8 beim Einschrauben des Schraubbolzens 7 verhindern. Damit ist ein einhändiges Spannen der Schelle 1 möglich.

Gegebenenfalls können die Haltelaschen 27, 28 mit einer Vorspannung gegen die Mutter 8 drücken, so dass diese bereits vor Einführen des Schraubbolzens 7 an der Spannbacke 5 gesichert ist.

Fig. 6 zeigt eine Ausgestaltung mit einer Mutter 8, die in zwei gegenüberliegenden Seiten jeweils eine Nut 29, 30 aufweist, in die die Haltelaschen 27, 28 eingreifen. Dadurch ergibt sich eine besonders stabile, definierte Lagerung der Mutter 8.

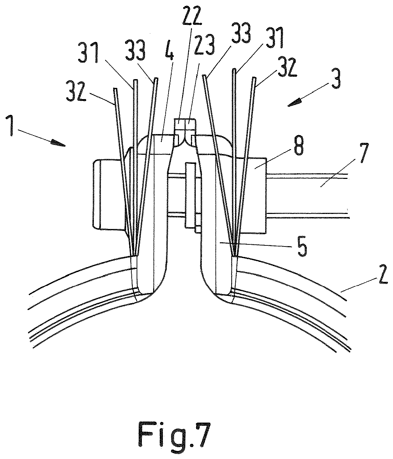

In Fig. 7 ist ein den Spannkopf 3 zeigender Ausschnitt der Schelle 1 dargestellt. Die Spannbacken 4, 5 liegen dabei unter Verformung der Laschen 22, 23 noch nicht ganz aneinander an, die Schelle 1 ist also noch nicht vollständig gespannt.

In der gezeigten Darstellung sind die Spannbacken 4, 5 parallel zueinander ausgerichtet, sie verlaufen damit parallel zu einer imaginären vertikalen Linie 31, 31'. Mit 32, 32' sind imaginäre Linien bezeichnet, die die Neigung um maximal 5° jeweils nach außen anzeigt, um die die Spannbacken 4, 5 im ungespannten Zustand nach außen geneigt sein können. Mit 33, 33' sind imaginäre Linien bezeichnet, die die Neigung um maximal 5° jeweils nach innen anzeigt, um die die Spannbacken 4, 5 im ungespannten Zustand nach innen geneigt sein können. Zwischen den Spannbacken wird damit ein Winkel mit einem Betrag größer als 0° und kleiner oder gleich 10° eingeschlossen. Dies führt dazu, dass sich die Spannbacken beim Spannen nach und nach unter elastischer Verformung aneinander anlegen, wobei der durch die elastische Verformung hervorgerufene Verformungswiderstand beispielsweise durch ein automatisches Setzwerkzeug detektiert werden kann, um so eine automatisierte, reproduzierbare Montage zu ermöglichen. Die Erfindung ist nicht auf eine der vorbeschriebenen Ausführungsformen beschränkt, sondern in vielfältiger Weise abwandelbar. Die erfindungsgemäße Schelle ermöglicht das Einbringen höherer Spannkräfte bei geringen inneren Spannungen und ist dabei insbesondere für Hochtemperaturanwendung und Anwendungen mit wechselnden Temperaturen geeignet.

### Bezugszeichenliste

- 1.: Schelle
- 2.: Schellenband
- 3.: Spannkopf
- 4.: Spannbacke
- 5.: Spannbacke
- 6.: Spannelement
- 7.: Schraubbolzen
- 8.: Mutter
- 9.: Außengewinde
- 10.: Kopf
- 11.: Basis
- 12.: Flanke
- 13.: Flanke
- 14.: Ausnehmung
- 15.: Ausnehmung
- 16.: Ausnehmung
- 17.: Durchführöffnung
- 18.: Verstärkungssicke
- 19.: Rand
- 20.: Kreissegment
- 21.: Kreissegment
- 22.: Lasche
- 23.: Lasche
- 24.: Element
- 25.: Lasche
- 26.: Lasche
- 27.: Haltelasche
- 28.: Haltelasche
- 29.: Nut
- 30.: Nut
- 31.: Linie
- 32.: Linie
- 33.: Linie

## Patentansprüche

1. Schelle (1) mit einem Schellenband (2), das einen Spannkopf (3) mit zwei Spannbacken (4, 5) aufweist, in denen jeweils eine Durchführöffnung (17) ausgebildet ist, durch die ein Spannelement (6) zum Spannen der Schelle (1) geführt ist, wobei an einem Rand (19) der Durchführöffnungen (17) jeweils mindestens eine Anlagefläche (20, 21) ausgebildet ist, an die eine Auflagefläche des Spannelements (6) zumindest teilweise anlegbar ist, wobei die Spannbacken geneigt (4, 5) zueinander angeordnet sind und eine der Spannbacken (4, 5) eine Verdrehsicherung für das Spannelement (6) aufweist, **dadurch gekennzeichnet, dass** in den Spannbacken (4, 5) zumindest eine Verstärkungssicke (18) ausgebildet ist.

2. Schelle nach Anspruch 1, **dadurch gekennzeichnet, dass** das Spannelement (6) einen Schraubbolzen (7) mit einer Mutter (8) aufweist, wobei gegebenenfalls der Schraubbolzen (7) ein Außengewinde (9) mit einer reibungsmindernder Beschichtung aufweist.

3. Schelle nach einem der vorhergehenden Ansprüche, **dadurch gekennzeichnet, dass** die Spannbacken (4, 5) derart gegeneinander geneigt sind, dass sie sich beim Spannen zunächst teilweise berühren und beim weiteren Spannen aneinander anlegen.

4. Schelle nach einem der vorhergehenden Ansprüche, **dadurch gekennzeichnet, dass** ein Neigungswinkel zwischen den Spannbacken (4, 5) mehr als 0° und bis zu 10° beträgt.

5. Schelle nach einem der vorhergehenden Ansprüche, **dadurch gekennzeichnet, dass** mindestens eine Spannbacke (5) zumindest eine zur anderen Spannbacke (4) gerichtete, verformbare Lasche (22, 23, 25, 26) aufweist

6. Schelle nach Anspruch 5, **dadurch gekennzeichnet, dass** die Lasche (22, 23) einstückig mit der Spannbacke (5) ausgebildet ist.

7. Schelle nach Anspruch 5, **dadurch gekennzeichnet, dass** die Lasche (25, 26) als Element (24) ausgebildet ist, dass insbesondere mit dem Spannelement (6) an der Spannbacke (5) gehalten ist.

8. Schelle nach Anspruch 7, **dadurch gekennzeichnet, dass** die Verdrehsicherung durch das Element (24) gebildet ist.

9. Schelle nach einem der Ansprüche 5 bis 8, **dadurch gekennzeichnet, dass** an beiden Spannbacken (4, 5) jeweils zumindest eine Lasche (22, 23) angeordnet ist.

10. Schelle nach einem der vorhergehenden Ansprüche, **dadurch gekennzeichnet, dass** zumindest eine der Anlageflächen (20, 21) eine reibungsmindernde Beschichtung aufweist.

11. Schelle nach einem der vorhergehenden Ansprüche, **dadurch gekennzeichnet, dass** die Anlagefläche (20, 21) erhaben ist, wobei die Anlagefläche (20, 21) kleiner ist als die Auflagefläche des Spannelements (6).

12. Schelle nach einem der vorhergehenden Ansprüche, **dadurch gekennzeichnet, dass** die Anlagefläche in Form von insbesondere zwei diametral gegenüberliegenden Kreissegmenten (20, 21) ausgebildet ist.

13. Schelle nach einem der vorhergehenden Ansprüche, **dadurch gekennzeichnet, dass** die Anlagefläche (20, 21) im Bereich der Verstärkungssicke (18) angeordnet ist, die in der Spannbacke (4, 5) ausgebildet ist.

14. Schelle nach einem der vorhergehenden Ansprüche, **dadurch gekennzeichnet, dass** die Schelle (1) als Profilschelle ausgebildet ist, wobei das Schellenband (2) eine Basis (11) und zwei radial nach innen gerichtete Flanken (12, 13)umfasst, wobei das Schellenband (2) insbesondere einen trapezförmigen oder dreieckigen Querschnitt aufweist.

15. Schelle nach Anspruch 14, **dadurch gekennzeichnet, dass** an zumindest einer Position in mindestens einer der Flanken (12, 13) mindestens eine Ausnehmungen (14, 15, 16) ausgebildet ist.

## Claims

1. A clamp (1) having a clamp band (2) which comprises a clamping head (3) with two clamping jaws (4, 5), a feed-through opening (17), through which a clamping element (6) is fed for tensioning the clamp (1), being realized in each of said clamping jaws, wherein at least one contact surface (20, 21), on which a support surface of the clamping element (6) can be placed at least in part, is realized on an edge (19) of each of the passage openings (17), wherein the clamping jaws (4, 5) are arranged at an angle with respect to one another and one of the clamping jaws (4, 5) comprises an anti-rotation device for the clamping element (6), **characterized in that** at least one reinforcing bead (18) is realized in the clamping jaws (4, 5).

2. The clamp as claimed in claim 1, **characterized in that** the clamping element (6) comprises a screw bolt (7) with a nut (8), wherein, where applicable, the screw bolt (7) comprises an external thread (9) with a friction-reducing coating.

3. The clamp as claimed in either of the preceding claims, **characterized in that** the clamping jaws (4, 5) are inclined at an angle to one another in such a manner that, during the tensioning operation, first of all they contact one another in part and, when clamped further, they bear against one another.

4. The clamp as claimed in one of the preceding claims, **characterized in that** an angle of inclination between the clamping jaws (4, 5) is more than 0° and up to 10°.

5. The clamp as claimed in one of the preceding claims, **characterized in that** at least one clamping jaw (5) comprises at least one deformable lug (22, 23, 25, 26) which is directed to the other clamping jaw (4).

6. The clamp as claimed in claim 5, **characterized in that** the lug (22, 23) is realized in one piece with the clamping jaw (5).

7. The clamp as claimed in claim 5, **characterized in that** the lug (25, 26) is realized as an element (24) which is held on the clamping jaw (5) in particular with the clamping element (6).

8. The clamp as claimed in claim 7, **characterized in that** the anti-rotation device is formed by the element (24).

9. The clamp as claimed in one of claims 5 to 8, **characterized in that** at least one lug (22, 23) is arranged on each of both clamping jaws (4, 5).

10. The clamp as claimed in one of the preceding claims, **characterized in that** at least one of the contact surfaces (20, 21) comprises a friction-reducing coating.

11. The clamp as claimed in one of the preceding claims, **characterized in that** the contact surface (20, 21) is raised, wherein the contact surface (20, 21) is smaller than the support surface of the clamping element (6).

12. The clamp as claimed in one of the preceding claims, **characterized in that** the contact surface is realized in the form of, in particular, two diametrically opposite circle segments (20, 21).

13. The clamp as claimed in one of the preceding claims, **characterized in that** the contact surface (20, 21) is arranged in the region of the reinforcing bead (18) which is realized in the clamping jaw (4, 5).

14. The clamp as claimed in one of the preceding claims, **characterized in that** the clamp (1) is realized as a profile clamp, wherein the clamp band (2) includes a base (11) and two radially inwardly directed flanks (12, 13), wherein the clamp band (2) comprises, in particular, a trapezoidal or triangular cross section.

15. The clamp as claimed in claim 14, **characterized in that** at least one recess (14, 15, 16) is realized in at least one position in at least one of the flanks (12, 13).

## Revendications

1. Collier de serrage (1) avec une bande de serrage (2) qui comprend une tête de serrage (3) avec deux mâchoires de serrage (4, 5), dans chacune desquelles est réalisée une ouverture de passage (17) à travers laquelle un élément de serrage (6) est amené pour tendre le collier de serrage (1), dans lequel au moins une surface de contact (20, 21), sur laquelle une surface d'appui de l'élément de serrage (6) peut être posée au moins en partie, est réalisée sur un bord (19) de chacune des ouvertures de passage (17), les mâchoires de serrage (4, 5) étant disposées en angle l'une par rapport à l'autre et l'une des mâchoires de serrage (4, 5) présentant un dispositif anti-rotation pour l'élément de serrage (6), **caractérisé en ce qu'**au moins un bourrelet de renforcement (18) est réalisé dans les mâchoires de serrage (4, 5).

2. Collier de serrage selon la revendication 1, **caractérisé en ce que** l'élément de serrage (6) comprend un boulon fileté (7) avec un écrou (8), dans lequel, le cas échéant, le boulon fileté (7) comprend un filetage extérieur (9) avec un revêtement réduisant le frottement.

3. Collier de serrage selon l'une ou l'autre des revendications précédentes, **caractérisée en ce que** les mâchoires de serrage (4, 5) sont inclinées l'une par rapport à l'autre selon un angle tel que, lors de l'opération de tension, elles se touchent d'abord partiellement et, lors de la poursuite du serrage, elles s'appuient l'une contre l'autre.

4. Collier de serrage selon l'une des revendications précédentes, **caractérisée en ce qu'**un angle d'inclinaison entre les mâchoires de serrage (4, 5) est supérieur à 0° et jusqu'à 10°.

5. Collier de serrage selon l'une des revendications précédentes, **caractérisée en ce qu'**au moins une mâchoire de serrage (5) comprend au moins un ergot (22, 23, 25, 26) déformable qui est dirigé vers l'autre mâchoire de serrage (4).

6. Collier de serrage selon la revendication 5, **caractérisée en ce que** l'ergot (22, 23) est réalisé en une seule pièce avec le mors de serrage (5).

7. Collier de serrage selon la revendication 5, **caractérisé en ce que** l'ergot (25, 26) est réalisé sous la forme d'un élément (24) qui est maintenu sur la mâchoire de serrage (5) notamment avec l'élément de serrage (6).

8. Collier de serrage selon la revendication 7, **caractérisée en ce que** le dispositif anti-rotation est formé par l'élément (24).

9. Collier de serrage selon l'une des revendications 5 à 8, **caractérisé en ce qu'**au moins un ergot (22, 23) est disposé sur chacune des deux mâchoires de serrage (4, 5).

10. Collier de serrage selon l'une des revendications précédentes, **caractérisée en ce qu'**au moins une des surfaces de contact (20, 21) comprend un revêtement réducteur de frottement.

11. Collier de serrage selon l'une des revendications précédentes, **caractérisée en ce que** la surface de contact (20, 21) est surélevée, la surface de contact (20, 21) étant plus petite que la surface d'appui de l'élément de serrage (6).

12. Collier de serrage selon l'une des revendications précédentes, **caractérisée en ce que** la surface de contact est réalisée sous la forme, notamment, de deux segments de cercle (20, 21) diamétralement opposés.

13. Collier de serrage selon l'une des revendications précédentes, **caractérisée en ce que** la surface de contact (20, 21) est disposée dans la zone du bourrelet de renforcement (18) qui est réalisé dans la mâchoire de serrage (4, 5).

14. Collier de serrage selon l'une des revendications précédentes, **caractérisé en ce que** le collier de serrage (1) est réalisé sous forme de collier de serrage profilé, la bande de serrage (2) comprenant une base (11) et deux flancs (12, 13) dirigés radialement vers l'intérieur, la bande de serrage (2) présentant notamment une section transversale trapézoïdale ou triangulaire.

15. Collier de serrage selon la revendication 14, **caractérisé en ce qu'**au moins un évidement (14, 15, 16) est réalisé dans au moins une position dans au moins un des flancs (12, 13).
